# EUROPÄISCHE PATENTANMELDUNG

(11) **EP 0 778 654 A2**
(43) Veröffentlichungstag der Anmeldung: **11.06.1997**
(21) Anmeldenummer: 96118956.0
(22) Anmeldetag: 27.11.1996
(51) Int. Cl.: H02K 21/12

(54) **Fahrradlichtmaschine mit Drehstromgeneratoranordnung**

(30) Priorität: 07.12.1995 DE 19545680
(71) Anmelder: FER Fahrzeugelektrik GmbH, 99819 Eisenach (DE)
(72) Erfinder: Werner, Hermann, 99817 Eisenach (DE); Lössl, Erich, 99817 Eisenach (DE); Müller, Burkhard, 41352 Korschenbroich (DE)
(74) Vertreter: Weller, Erich W.

(57) **Zusammenfassung**

Die Erfindung bezieht sich auf eine Fahrradlichtmaschine mit einer Drehstromgeneratoranordnung mit einem Stator und einem relativ zum Stator drehbeweglichen Rotor.

Es wird ein Aufbau vorgeschlagen, bei dem der Stator (2) oder der Rotor (1) sich radial erstreckende Polfinger (3) aufweist, die einzeln mit je einer umgebenden Magnetpulenwicklung (5) bewickelt sind, wobei die Polzahlen von Rotor und Stator in einem nicht ganzzahligen Verhältnis zueinander stehen. Dies erlaubt die Realisierung einer Fahrradlichtmaschine mit hohem Wirkungsgrad schon bei relativ geringer Fahrgeschwindigkeit.

Verwendung z.B. zur Speisung von Fahrradbeleuchtungen.

## Beschreibung

Die Erfindung bezieht sich auf eine Fahrradlichtmaschine mit einer Drehstromgeneratoranordnung, die einen Stator und einen relativ zum Stator drehbeweglichen Rotor beinhaltet.

Fahrradlichtmaschinen dienen bekanntlich dazu, am Fahrrad angeordnete elektrische Verbraucher, insbesondere einen Scheinwerfer und ein Rücklicht, mit elektrischer Energie zu speisen, die aus der Radbewegung gewonnen wird. Die Lichtmaschinen sind beispielsweise als Seiten- oder Speichendynamo am Vorderrad angeordnet.

Für den Einsatzzweck am Fahrrad sind bislang beispielsweise Synchrongeneratoren mit einer einzigen Spulenwicklung am Stator und drei Permanentmagnet-Polpaaren am Rotor geläufig. Solche einphasigen Fahrraddynamos weisen relativ hohe magnetische Polhaftkräfte auf. Eine weitere Schwierigkeit solcher einfach aufgebauter Fahrraddynamos besteht darin, daß sie zwar aufgrund der nur einen verwendeten Spule eine hohe innere Impedanz besitzen, die eine Selbstbegrenzung der abgegebenen Leistung ermöglicht, jedoch führt ein Ausfall des Rücklichts oder des Scheinwerfers zu einem merklichen Spannungsanstieg an der jeweils anderen, noch intakten Lichtquelle, die dadurch übermäßig belastet wird. Zudem liefern diese einfachen herkömmlichen Fahrraddynamos bei Fahrgeschwindigkeiten unter 15km/h noch keine für den Betrieb der Fahrradbeleuchtungsanlage zufriedenstellende Leistung, und bei hohen Drehzahlen sinkt der Wirkungsgrad durch das Entstehen merklicher Wirbelströme deutlich ab.

Aus der Patentschrift DE 43 17 817 C1 ist eine Fahrradlichtmaschine mit Drehstromgeneratoranordnung bekannt, bei welcher der Stator aus drei gleich aufgebauten Induktionsspulen mit Polfingerkäfigen aus Weicheisen besteht, wobei die Polfinger der einzelnen Polfingerkäfige gegeneinander in Drehrichtung um jeweils ein Drittel des Abstands zweier benachbarter Polfinger desselben Polfingerkäfigs versetzt sind. Damit soll eine Reduktion der magnetischen Polhaftkraft, d.h. der Polfühligkeit, erreicht werden, indem immer nur ein Statorkäfig in vollem magnetischem Kraftschluß sein kann, während die jeweils anderen beiden Statorkäfige durch sich subtrahierende magnetische Zugkräfte an den Polfingern teilweise eine Neutralstellung einnehmen.

Der Erfindung liegt als technisches Problem die Bereitstellung einer Fahrzeuglichtmaschine mit Drehstromgeneratoranordnung zugrunde, die eine geringe Polfühligkeit aufweist, bereits bei niedrigen Fahrgeschwindigkeiten eine relativ hohe elektrische Ausgangsleistung zur Verfügung stellt und mit für das Gebiet der Fahrradelektrik vertretbar geringem Aufwand herstellbar ist.

Dieses Problem wird durch eine Fahrradlichtmaschine mit den Merkmalen des Anspruchs 1 gelöst. Bei dieser Lichtmaschine weist der Stator und/oder der Rotor sich radial erstreckende Polfinger auf, die einzeln mit je einer umgebenden Magnetspulenwicklung bewickelt sind, wobei die Polzahlen von Rotor und Stator in einem nicht ganzzahligen Verhältnis zueinander stehen. Die letztgenannte Eigenschaft hält die Polfühligkeit der Lichtmaschine gering. Das Vorsehen der sich radial erstreckenden Polfinger und die einzelne Bewicklung derselben mit je einer Magnetspule ermöglichen die Realisierung einer Drehstromgeneratoranordnung, die bereits bei geringen Fahrgeschwindigkeiten, d.h. geringen Rotordrehzahlen, eine vergleichsweise hohe elektrische Leistung bereitzustellen vermag. Dabei ist die Einzelbewicklung der Polfinger auf einer entsprechend ausgelegten Spezialmaschine sehr wirtschaftlich durchführbar und erlaubt einen hohen Füllgrad der Nuten zwischen den Polfingern. Die solchermaßen ausgelegte Fahrradlichtmaschine besitzt bereits ab geringen Fahrgeschwindigkeiten im Bereich zwischen 5km/h und 10km/h einen bemerkenswert hohen Wirkungsgrad, so daß die erhöhte elektrische Leistung keinen merklichen Kraftmehraufwand erfordert.

Eine nach Anspruch 2 weiterbildend optimierte Fahrradlichtmaschine besitzt besonders geringe Verluste sowohl im Leerlauf als auch unter Last, was neben der speziellen Polfingereinzelbewicklung vor allem aus dem speziell gewählten Polzahlverhältnis, der Wahl eines geblechten Stators vorzugsweise aus hochwertigem Dynamoblech sowie der Verwendung eines kunststoffgebundenen Neodym-Eisen-Bor-Materials für den Rotor resultiert.

In einer Weiterbildung der Erfindung nach Anspruch 3 ist im Laststromkreis ein spannungsbegrenzendes Schaltnetzteil vorgesehen, das die gleichgerichtete Generatorausgangsspannung unterhalb einer gewählten Grenzspannung unbeeinflußt durchläßt, während es bei über der Grenzspannung liegender Eingangsspannung die Spannung am Ausgang des Schaltnetzteils auf die Grenzspannung einregelt. Auf diese Weise bleibt die elektrische Versorgungsspannung, beispielsweise für die Fahrradbeleuchtung, bei steigender Fahrgeschwindigkeit auf einem konstanten Wert, und bei Ausfall des Rücklichts oder des Scheinwerfers besteht keine Gefahr einer überhöhten Belastung für die andere, noch intakte Lichtquelle.

Eine nach Anspruch 4 weitergebildete Fahrradlichtmaschine hat den Vorteil, daß durch die Strombegrenzungsschaltung nicht nur die Lichtmaschine vor Überlastung und Kurzschluß geschützt ist, sondern vor allem auch das Generatordrehmoment begrenzt wird, um ein Durchrutschen eines generatoreingangsseitig vorgesehenen mechanischen Drehmomentübertragungsteils, z.B. eines Zahnriemens oder einer Laufrolle, zu verhindern.

In einer Weiterbildung der Erfindung nach Anspruch 5 wird ein Feldeffekttransistor mit Übertemperaturschaltung als Leistungsschalter des Schaltnetzteils verwendet, wodurch selbst bei hoher Fahrradgeschwindigkeit im Kurzschlußfall eine Überhitzung dieses Schalters vermieden wird.

Bevorzugte Ausführungsformen der Erfindung sind in den Zeichnungen dargestellt und werden nachfolgend beschrieben. Hierbei zeigen:
- Fig. 1: eine schematische Seitenansicht des Stator-Rotor-Komplexes einer Drehstrom-Fahrradlichtmaschine mit einzeln bewickelten Polfingern,
- Fig. 2: ein schematisches Blockschaltbild der Fahrradlichtmaschine mit dem Stator-Rotor-Komplex von Fig. 1,
- Fig. 3: ein Diagramm zur Veranschaulichung typischer Kennlinien für Ausgangsspannung, Drehmoment und Wirkungsgrad in Abhängigkeit von der Fahrgeschwindigkeit für die Fahrradlichtmaschine der Fig. 1 und 2,
- Fig. 4: eine Längsschnittansicht einer Fahrradlichtmaschine gemäß Fig. 1 und 2 in Seitendynamo-Bauweise und
- Fig. 5: eine Längsschnittansicht einer Fahrradlichtmaschine gemäß Fig. 1 und 2 in Speichendynamo-Bauweise.

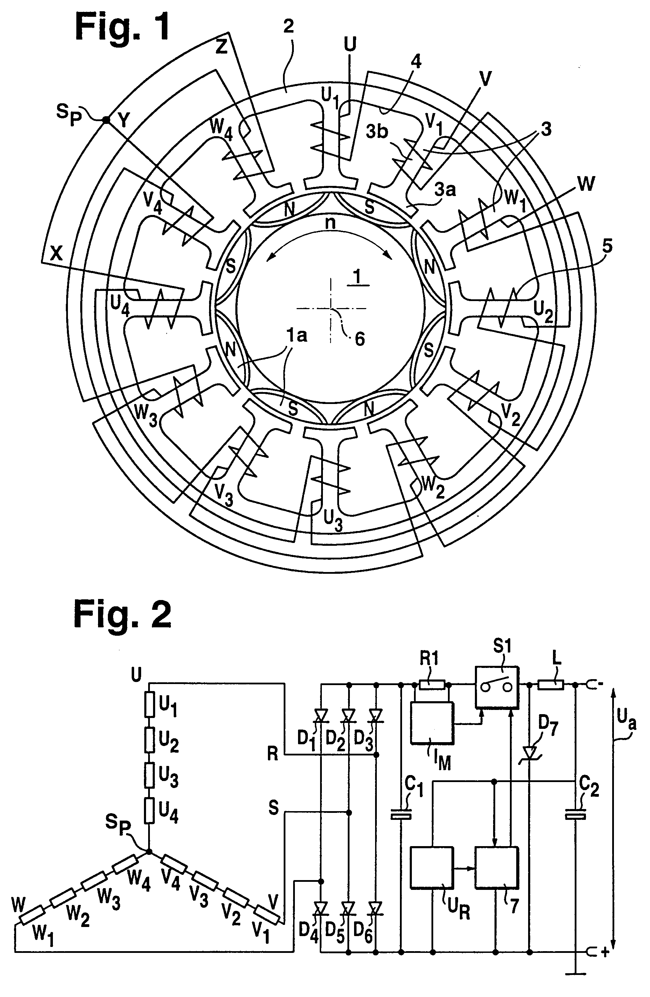

Fig. 1 zeigt einen vorteilhaften Aufbau des Stator-Rotor-Komplexes einer Drehstromgeneratoranordnung für eine Fahrradlichtmaschine. Der innenliegende Rotor (1) beinhaltet einen Permanentmagnetring aus kunststoffgebundenem Neodym-Eisen-Bor-Material, der in Umfangsrichtung acht Magnetpole (1a), wie üblich abwechselnd einen magnetischen Südpol (S) und einen magnetischen Nordpol (N), aufweist. Der Stator (2) umgibt den innenliegenden Rotor (1) ringförmig koaxial zur Rotordrehachse (6) und beinhaltet zwölf sich radial nach innen erstreckende, in Umfangsrichtung äquidistant angeordnete Polfinger (3), die sich an ihrem freien, den Rotormagnetpolen (1a) gegenüberliegenden Enden (3a) gegenüber einem schmäleren Mittelbereich (3b) unter Bildung von Nuten (4) zwischen den Polfingern (3) verbreitern. Der Stator (2) ist insgesamt als geblechter Stator aus hochwertigem Dynamoblech ausgeführt, was das Auftreten von Wirbelströmen reduziert. Der gezeigte Stator-Rotor-Aufbau besitzt folglich ein Verhältnis der Rotorpolzahl zur Statorpolzahl von 2/3. Dies führt zu einer sehr geringen Polfühligkeit, bei der die Welligkeit der Ausgangsspannung des Drehstromsystems direkt nach Gleichrichtung ca. 4% beträgt.

Jeder Polfinger (3) des Stators (2) ist einzeln in seinem Mittelbereich (3b) mit einer eigenen Magnetspule (5) umwickelt, wobei die Bewicklung sehr wirtschaftlich automatisch auf einer Spezialmaschine erfolgen kann. Die Bewicklung ist dabei mit vergleichweise hohem Füllgrad der Nuten (4) zwischen den einzelnen Polfingern (3) möglich, wobei die Spulenaufnahmenuten (4) aufgrund ihrer radial merklich von der Drehachse (6) beabstandeten Lage einen relativ großen Aufnahmeraum für die Magnetspulenwicklungen (5) zur Verfügung stellen.

Die Magnetspulen (5) der einzelnen Polfinger (3) sind in Drehstrom-Sternschaltung miteinander verschaltet, wobei vom Sternpunkt (Sₚ) die drei Drehstrom-Leitungszweige (x, y, z) abgehen, in denen jeweils vier Magnetspulen (U₁ bis U₄; V₁ bis V₄; W₁ bis W₄) hintereinandergeschaltet sind. Dabei gehören jeweils die Magnetspulen jedes dritten Polfingers (3) zum selben Drehstrom-Leitungszweig (x, y, z). Fig. 2 zeigt in ihrer linken Hälfte das sich durch diese Verschaltung der einzelnen Magnetspulen (5) von Fig. 1 ergebende Ersatzschaltbild mit den drei Ausgängen (U, V, W) der Sternschaltung mit dem Sternpunkt (Sₚ). Die Sternschaltung bietet den Vorteil, daß mit dickerem Draht gewickelt werden kann, was zu einem besseren Füllgrad der Nuten (4) führt.

Fig. 2 zeigt außerdem den weiteren schaltungstechnischen Aufbau für die Fahrradlichtmaschine mit dem Stator-Rotor-Komplex von Fig. 1. Wie aus Fig. 2 ersichtlich, erfolgt zunächst eine Gleichrichtung der drei über die Außenleiter (R, S, T) der Drehstrom-Sternschaltung geleiteten Drehstromphasen mittels einer üblichen Brückenschaltung mit sechs Halbleiterdioden (D₁ bis D₆). Ein nachgeschalteter Kondensator (C₁) puffert die gleichgerichtete Spannung und glättet sie auf eine Restwelligkeit von weniger als 4%. Ein anschließend im Laststromkreis angeordnetes Schaltnetzteil wirkt dahingehend, die Ausgangsspannung (Uₐ) der Lichtmaschine lastunabhängig auf eine Grenzspannung von ca. 13,5V für das auf 12V/6,2W ausgelegte System zu begrenzen. Mit dieser Verschaltung lassen sich der Strom in den Wickelungen im wesentlichen konstant und die Kupferverluste klein halten. Die Ströme bleiben annähernd sinusförmig, was auch hinsichtlich der Eisenverluste von Vorteil ist.

Speziell beinhaltet das Schaltnetzteil hierzu einen ansteuerbaren Transistorleistungsschalter (S1), eine dazu seriell geschaltete Spule (L) und einen parallel zum Ausgang liegenden Kondensator (C₂). Eine Referenzspannungseinheit (U_{R}) erzeugt eine für die gewählte Grenzspannung repräsentative Spannungsreferenz, die einer Steuereinheit (7) zugeführt wird, welche die Istspannung am Kondensator (C₂) des Schaltnetzteils mit der Grenzspannung vergleicht und den ansonsten leitend geschalteten Transistorleistungsschalter (S1) sperrend ansteuert, sobald diese Istspannung über die Grenzspannung ansteigt. Genauer gesagt arbeitet das Schaltnetzteil als Zweipunktregler mit einer gewissen Hysterese zur Vermeidung von unerwünschten Schaltschwingungen, d.h. der Transistorleistungsschalter (S1) wird beispielsweise bei Überschreiten eines Grenzspannungswertes von 13,6V sperrend und bei Unterschreiten eines Grenzspannungswertes von ca. 13,4V wieder leitend geschaltet. Bei dieser Zweipunktregelung stellt sich mit höher werdender Eingangsspannung ein kleineres Tastverhältnis und eine höhere Schaltfrequenz des Schaltnetzteils ein.

Parallel zum Kondensator (C₂), jedoch vor der Speicherdrossel (L) liegt noch eine Schottky-Diode (D₇) des Schaltnetzteils. Vor dem Transistorleistungsschalter (S1) befindet sich eine Strombegrenzungsschaltung (I_{M}), welche den Transistorleistungsschalter (S1) sperrend ansteuert, sobald über einem Serienwiderstand (R1) ein vorgegebener maximaler Spannungsabfall auftritt. Damit wird die Lichtmaschine vor Überlastung und Kurzschluß geschützt. Gleichzeitig wird das Generatordrehmoment begrenzt, was im Fall eines Speichendynamos ein Durchrutschen von dort zur Drehmomentübertragung verwendeten Zahnriemen oder im Fall einer Ausführung als Seitendynamo ein Durchrutschen der dort verwendeten Laufrolle am Reifen verhindert. Um auch bei hoher Geschwindigkeit im Fall eines Kurzschlusses eine Überhitzung des Transistorleistungsschalters (S1) zu verhindern, wird vorzugsweise ein Feldeffekttransistor mit Übertemperaturabschaltung als Leistungsschalter (S1) eingesetzt.

Das Schaltnetzteil besitzt eine hohe Spannungsfestigkeit und hat die Eigenschaft, die von der Generator-Sternschaltung gelieferte Spannung praktisch verlustfrei als Ausgangsspannung (Uₐ) zur Verfügung zu stellen, solange die Grenzspannung noch nicht erreicht ist. Das teilweise austastende Eingreifen des Schaltnetzteils setzt erst bei Überschreiten der Grenzspannung durch die Eingangsspannung ein. Mit Ausnahme der Speicherdrossel (L) und den beiden Kondensatoren (C₁, C₂) in Elko-Bauweise läßt sich das Schaltnetzteil in SMD-Technik ausführen. Die nur als Funktionsblöcke gezeichneten Einheiten, d.h. die Strombegrenzungsschaltung (I_{M}), die Spannungsreferenzschaltung (U_{R}) und die Steuereinheit (7) sind von einem herkömmlichen, vom Fachmann bei Kenntnis der oben beschriebenen, geforderten Funktionen ohne weiteres realisierbaren Aufbau, worauf hier deshalb nicht näher eingegangen zu werden braucht. Im übrigen können auf der Leiterplatte des Schaltnetzteils gleichzeitig die zwölf Magnetspulen (3) miteinander verschaltet sein, wobei diese Verschaltung alternativ jedenfalls zum großen Teil auch bereits auf der automatischen Wickelmaschine erfolgen kann.

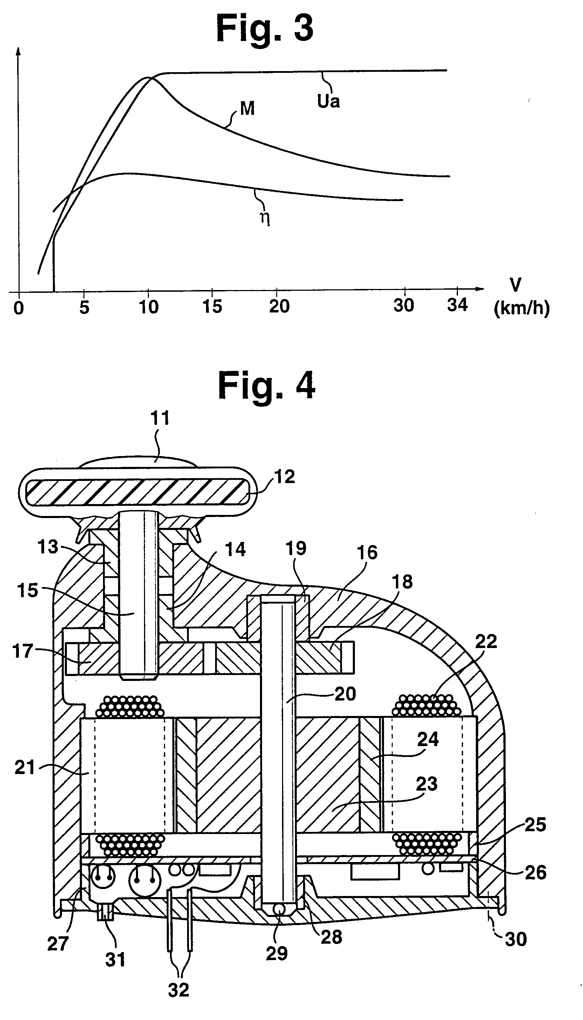

In Fig. 3 sind typische Kennlinien für eine gemäß der Fig. 1 und 2 realisierte Fahrradlichtmaschine in Abhängigkeit von der Fahrgeschwindigkeit aufgetragen. Die erzeugte Ausgangsspannung (Uₐ), gemessen an einer normierten Last von 29,4Ω, setzt bei 2,5km/h mit ca. 2,8V ein, beträgt bei 5km/h und 7,5km/h bereits 6,6V bzw. 10,1V und konvergiert ab ca. 12,5km/h gegen die gewählte Grenzspannung von 13,5V, die für höhere Fahrgeschwindigkeiten durch die Spannungsbegrenzungsfunktion des Schaltnetzteils beibehalten wird. Das Drehmoment (M) steigt bei geringer Fahrgeschwindigkeit zunächst an, bis es bei ca. 10km/h sein Maximum erreicht und mit zunehmender Fahrgeschwindigkeit wieder abfällt. Der Wirkungsgrad (η) beträgt bei 2,5km/h bereits 0,45 und steigt bei 5km/h auf 0,62. Im Bereich zwischen 7,5km/h und 10km/h durchläuft der Wirkungsgrad (η) sein Maximum mit einem beachtlichen Wert von ca. 0,67 und sinkt dann nur relativ geringfügig ab. Selbst bei einer Fahrgeschwindigkeit von ca. 30km/h beträgt der Wirkungsgrad (η) noch ungefähr 0,5.

Es zeigt sich damit, daß der gezeigte Aufbau der Fahrradlichtmaschine durch Verwendung des wirbelstromreduzierenden, geblechten Stators (2), des hochwertigen Magnetmaterials für den Rotor (1) und der charakteristischen Auslegung durch einzeln mit Magnetspulen versehene Polfinger und Verschaltung derselben in einer Drehstrom-Sternschaltung mit spannungsbegrenzendem Schaltnetzteil im Laststromkreis zu einem sehr leistungsstarken 12V/6,2W-System führt, das bereits bei 10km/h im wesentlichen seine Endspannung erreicht, auch bei höheren Fahrgeschwindigkeiten noch einen beachtlichen Wirkungsgrad besitzt und in seiner Speisespannung lastunabhängig begrenzt ist.

In Fig. 4 ist eine Realisierung einer solchen Fahrradlichtmaschine als Seitenläuferdynamo veranschaulicht. Die Lichtmaschine beinhaltet einen Laufrollenträger (11), auf dem eine Laufrolle (12 getragen ist und der das Drehmoment über eine in Lagern (13, 14) gehaltene Antriebswelle (15) ins Innere eines Dynamogehäuses (16) auf ein Zahnrad (17) überträgt, mit dem ein benachbartes Zahnrad (18) in Eingriff ist, das drehfest auf einer Generatorwelle (20) sitzt, die beidseits in Lagern (19, 28) gehalten ist und sich am unteren Stirnende gegen eine Kugel (29) abstützt. Der seitliche Versatz von Antriebswelle (15) und Generatorwelle (20) ist wegen des großen Generaturdurchmessers zweckmäßig.

Der Generatorteil entspricht im Aufbau demjenigen von Fig. 1. Ein innenliegender Rotor (23) sitzt drehfest auf der Generatorwelle (20) und ist in einem Außenumfangsbereich mit dem 8-Pol-Permamentmagnet (24) versehen. Der Rotor (23) wird koaxial vom ringförmigen, geblechten Stator (21) umgeben, der die zwölf radial nach innen ragenden, einzeln magnetspulenbewickelten Polfinger aufweist, wovon der zugehörige Wickelkopf (22) angedeutet ist. Über einen Distanzring (25) ist an der Unterseite dieser Generatoranordnung die zugehörige, das Schaltnetzteil enthaltende Leiterplatte (26) angebracht, die von einem unterseitig abschließenden Deckel (27) gehalten ist, der über Schraubverbindungen (30) am Gehäuse (16) montiert ist. Der Deckel weist eine Be- und Entlüftungsöffnung (31) sowie durchgeführte Flachsteckanschlüsse (32) auf, über welche die erzeugte Ausgangsspannung außen abgegriffen werden kann.

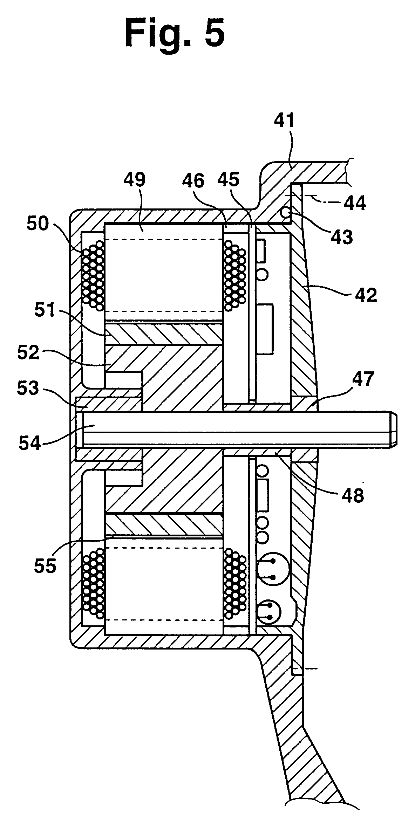

Fig. 5 zeigt die Realisierung einer Fahrzeuglichtmaschine der in den Fig. 1 und 2 gezeigten Art in Speichendynamo-Bauweise. Die Generatorwelle (54) ist hier mittig über ein hinteres Lager (53) am Dynamogehäuse (41) und über ein vorderes, abdichtendes Lager (7) an einem Gehäusedeckel (42) gehalten und wird wie üblich über ein Zahnrad oder einen Zahnriemen angetrieben. Der Deckel (42) ist über Schraubverbindungen (44) am Gehäuse (41) festgelegt. Das topfförmige Gehäuse (41) nimmt den mit der Generatorwelle (54) verknüpften Stator-Rotor-Komplex auf, der aus dem innenliegenden Rotor mit innerem Magnetträger (52) und äußerem 8-Pol-Permanentmagnet (51) sowie außenliegendem, geblechtem Stator (49) mit Wickelkopf (50) und den zwölf einzelbewickelten Polfingern besteht, wobei zwischen Rotor (51, 52) und koaxialem Stator (49) ein Luftspalt (55) frei bleibt. Ein Dichtring (43) dichtet das Gehäuseinnere bei aufgesetztem Deckel (42) ab. Zwischen Deckel (42) und Rotormagnetträger (52) ist eine Distanzhülse (48) auf die Generatorwelle (54) aufgeschoben. Innerhalb des dadurch geschaffenen, axialen Einbauraums ist die Leiterplatte (45) mit dem Schaltnetzteil und den erforderlichen Leiterbahnen in einem durch einen Distanzring (46) definierten Abstand zum Stator eingebracht, wobei sie auf der dem Distanzring (46) abgewandten Seite von einem axialen Ringflansch des Deckels (42) gehalten wird.

## Patentansprüche

1. Fahrradlichtmaschine mit
- einer Drehstromgeneratoranordnung mit einem Stator (2) und einem relativ zum Stator drehbeweglichen Rotor (1), dadurch gekennzeichnet, daß
- der Stator (2) oder der Rotor (1) sich radial erstreckende Polfinger (3) aufweist, die einzeln mit je einer umgebenden Magnetspulenwicklung (5) bewickelt sind, wobei die Polzahlen von Rotor und Stator zueinander in einem nicht ganzzahligen Verhältnis stehen.

2. Fahrradlichtmaschine nach Anspruch 1, weiter dadurch gekennzeichnet, daß
- der Stator (2) den Rotor (1) ringförmig umgibt und zwölf sich radial nach innen erstreckende, mit je einer umgebenden Magnetspulenwicklung (5) bewickelte Polfinger (3) aufweist, wobei von einem Sternpunkt (Sₚ) aus jeweils die Magnetspulen jedes dritten Polfingers in Serie geschaltet sind, und
- der Rotor (1) einen Permanentmagnet aus einem kunststoffgebundenen Neodym-Eisen-Bor-Material mit acht umfangsseiten Magnetpolen (1a) beinhaltet.

3. Fahrradlichtmaschine nach Anspruch 1 oder 2, weiter gekennzeichnet durch ein im Laststromkreis angeordnetes, spannungsbegrenzendes Schaltnetzteil, das eingangsseitig anstehende Spannungen bis zu einer vorgegebenen Grenzspannung unbeeinflußt durchläßt und über der Grenzspannung liegende Eingangsspannungen auf die Grenzspannung begrenzt.

4. Fahrradlichtmaschine nach Anspruch 3, weiter dadurch gekennzeichnet, daß das spannungsbegrenzende Schaltnetzteil eine Strombegrenzungsschaltung (I_{M}) beinhaltet, welche den Schalter (S1) des Schaltnetzteils stromunterbrechend ansteuert, sobald über einem Serienwiderstand (R1) eine vorgegebene Begrenzungsspannung überschritten wird, die so gewählt ist, daß das Generatordrehmoment auf einen Wert begrenzt wird, der ein Durchrutschen eines an der Generatoreingangsseite vorgesehenen Drehmomentübertragungsteils verhindert.

5. Fahrradlichtmaschine nach Anspruch 3 oder 4, weiter dadurch gekennzeichnet, daß als Schalter in dem Schaltnetzteil ein Feldeffekttransistor-Leistungsschalter (S1) mit Übertemperaturabschaltung eingesetzt wird.
